(19) Europäisches Patentamt
European Patent Office
Office européen des brevets

(11) Publication number: 0 375 444 A1

# (12) EUROPEAN PATENT APPLICATION

(21) Application number: 89313476.7

(22) Date of filing: 21.12.89

(51) Int. Cl.5: C08F 236/10, C09J 109/10, C09J 133/06

(30) Priority: 21.12.88 US 287428

(43) Date of publication of application: 27.06.90 Bulletin 90/26

(84) Designated Contracting States: BE DE FR GB IT

(71) Applicant: EXXON RESEARCH AND ENGINEERING COMPANY
P.O.Box 390, 180 Park Avenue
Florham Park, New Jersey 07932(US)

(72) Inventor: Agarwal, Pawan Kumar
580 Cabot Hill Road
Bridgewater New Jersey 08807(US)
Inventor: Hughes, Vincent Leo
18906 Par Two Circle
Humble Texas 77346(US)
Inventor: Jagisch, Frank Carl
3821 Lake LaRouge Drive
Baton Rouge Louisiana 07928(US)
Inventor: Lundberg, Robert Dean
4 Brian Drive
Bridgewater New Jersey 08807(US)
Inventor: Wagensommer, Joseph
57 Barchester Way
Westfield New Jersey 07090(US)

(74) Representative: Fletcher Watts, Susan J. et al
ESSO Engineering (Europe) Ltd. Patents & Licences Apex Tower High Street
New Malden Surrey KT3 4DJ(GB)

## (54) Adhesive composition.

(57) This invention relates to a pressure sensitive adhesive composition which includes a neutralized sulfonated copolymer of a conjugated diene/ a neutralized styrene sulfonate, wherein the neutralized sulfonated copolymer has 5 to 50 meq. of neutralized sulfonate groups per 100 grams of the neutralized sulfonated copolymer, and less than 250 parts by weight of a hydrocarbon resin of a petroleum or coal tar distillate, having 5 to 6 carbon atoms, the hydrocarbon resin being composed of aliphatic dienes and mono-olefins per 100 parts by weight of the neutralized sulfonated copolymer.

EP 0 375 444 A1

# ADHESIVE COMPOSITION

This invention relates to adhesive compositions and especially to pressure sensitive adhesive compositions.

Conventional high strength adhesives commonly are prepared by solvent based techniques. For example, block copolymers based on polystyrene and isoprene, can be dissolved in a suitable solvent containing a hydrocarbon resin tackifier. Upon casting these copolymers on a variety of substrates one obtains materials having outstanding adhesive properties. These materials can exhibit tack properties of 4-5 lbs. per inch (180° peel test) and retain their tack under load over long periods of time. These properties are normally attributed to systems that display a combination of appropriate polymer modulus coupled with extremely high molecular weight or to a suitable network that is induced in the resulting polymer system. These materials have achieved great prominence in the pressure-sensitive adhesive industry.

Despite the success of solvent based adhesives, the adhesive industry has a current need to employ water based adhesive candidates because the environmental and toxicity restrictions imposed by federal, state, and local governments markedly restrict the use of effective solvents. In addition, large scale use of the low polymer content in such solvent based adhesives having a low polymer content can present a financial liability. As a result of these factors, it is highly desirable that PSA's (pressure-sensitive adhesives) having similar properties to those achievable from solvent based systems be obtained from water based systems. There has been a little success in achieving the PSA properties from a water based polymer system that can equal the properties obtained from a solvent based PSA. Water based PSA's are deficient for several reasons: A water based PSA based on a conventional hydrocarbon monomer provides a hydrophobic polymer system contained in an aqueous matrix. The fusion of drying of a water based PSA system with all its incumbent surfactants and other additives to stabilize the emulsions adversely affects the adhesive performance in such systems. The commonly emulsified water based PSA's are deficient in their adhesive character as well as their long-term creep resistance (cohesive strength).

Previous inventions have described copolymers of isoprene or styrene and butadiene with a sulfonate monomer that gives rise to very stable emulsions at high solids content. The blending of these sulfonate copolymers with suitable resin emulsions followed by evaporation and fusion gives rise to clear, strong PSA candidates that can have good tack. These earlier inventions have shown that either aggressive tack or high cohesive strength can readily be achieved by these materials. However, until now, the combination of good tack and high cohesive strength in a single formulation has not been achievable. The reasons for the lack of success of achievement of the combination of these characteristics has not been apparent and, in fact, there has been an important question of whether that combination of characteristics could ever be achievable via this route. The lack of tack combined with high cohesive strength would not, in its own right, preclude commercialization of such systems, but would markedly limit the potential utility of such materials to label applications or low strength applications.

It has now been discovered that by suitably controlling the molecular weight of the sulfonate/isoprene copolymer and the level of sulfonate monomer within a fairly narrow window that a combination of very high cohesive strength, or hold to steel, properties plus very good tack properties can be achieved. The results described below will summarize a series of sulfonate copolymers prepared under a variety of conditions, some of which will exhibit good tack properties, others will exhibit good hold to steel properties, and then finally we will describe those specific systems which exhibit the desired combination of all those characteristics.

The present invention provides a pressure sensitive adhesive system derived from an emulsion comprising of:

(a) a metal neutralized sulfonated copolymer of a conjugated diene/a neutralized styrene sulfonate, said neutralized sulfonated copolymer having 5 to 100 meq. of neutralized sulfonated groups per 100 grams of said neutralized sulfonated copolymer wherein said neutralized sulfonated copolymer comprises at least 80% by weight of said conjugated diene and said neutralized sulfonated copolymer has an intrinsic viscosity of 0.5 to 3.0; and

(b) 25 to 300 parts by weight of a hydrocarbon tackifying resin based on a petroleum or coal tar distillate per 100 parts by weight of said neutralized sulfonated elastomeric copolymer.

Optionally, 1 to 30 parts of a preferential plasticizer per 100 parts of the neutralized sulfonated elastomeric co- or terpolymer can be added to the composition.

The present invention relates to unique and novel pressure sensitive adhesive compositions which comprise a mixture of neutralized sulfonated copolymer of a conjugated diene and a neutralized styrene sulfonate prepared by an emulsion polymerization process and a hydrocarbon resin, wherein to the

compositions can be optionally added an ionic preferential plasticizer, oil and/or a filler, thereby modifying the properties of the pressure sensitive adhesive compositions.

The solid copolymer of the instant invention preferably comprises at least one conjugated diene having from 4 to 12 carbon atoms or at least 80% by weight of a combination of at least one conjugated diene and styrene, wherein the combination contains less than 10 weight percent of styrene of the total 80 weight percent and a minor proportion of a metal or amine neutralized sulfonate monomer characterized by the formula:

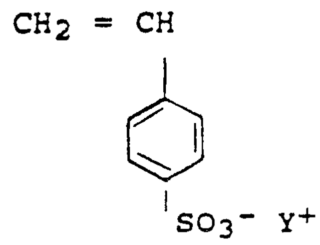

wherein Y is a cation selected from Groups IA, IIA, IB and IIB of the Periodic Table or an amine of the formula:

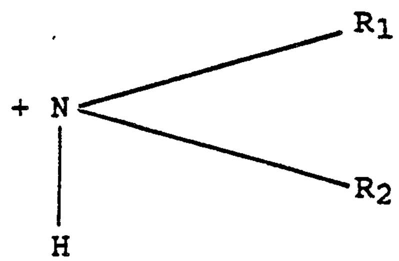

where $R_1$ and $R_2$ can be aliphatic groups of $C_1$ to $C_{12}$ or hydrogen. The copolymer is water insoluble having at least 0.2 weight percent sulfur to less than 3 weight percent sulfur chemically combined. The copolymer preferably has an intrinsic viscosity of 100 to 500,000 cps. The copolymer contains 5 to 100, preferably 5 to 50 meq. of neutralized sulfonated groups per 100 grams of neutralized sulfonated copolymer.

The instant invention relates to the formation of emulsions of sulfonate containing copolymers which are formed by a free radical copolymerization process. The monomers used in the free radical emulsion copolymerization processes are conjugated dienes which are copolymerized with sulfonate containing monomers.

In general, the conjugated diene and sulfonate containing monomers are dispersed in a water phase in the presence of a water soluble initiator or a redox system which has one component soluble in the oil phase and one component soluble in the water phase, and either with or without surfactant, wherein the temperature is sufficient to initiate polymerization. To the resultant latex is added a tackifier resin and the emulsion is doctor bladed onto a substrate and dried at room or elevated temperatures to form the adhesive film.

The copolymers of the instant invention preferably contain 0.5 to 3 weight percent of the chemically combined sulfur, more preferably 0.3 to 3, and most preferably 0.3 to 2 weight percent sulfur. The copolymers of the instant invention are water insoluble, thermally stable and oxidatively stable. Typical, but non-limiting examples of the copolymers which can be formed by the instant free radical emulsion copolymerization process are: butadiene/sodium styrene sulfonate copolymer, isoprene/sodium styrene sulfonate copolymer, butadiene/sodium vinyl sulfonate copolymer, isoprene/sodium vinyl sulfonate copolymer. Obviously, a large number of copolymers and even terpolymers can be formed by the instant free radical copolymerization process and the term copolymer as used generally herein shall be understood to include terpolymers. Typically, the copolymerization of any conjugated diene as so defined herein can be readily copolymerized with any sulfonate containing monomer as is defined herein.

Alternatively, other co- or terpolymers of vinyl monomers such as alkyl acrylates or methacrylates, or alkyl acrylate amides having 4 to 12 carbon atoms could be copolymerized with sulfonate containing monomers.

The conjugated dienes of the instant invention may be cyclic or acyclic and preferably contain 4 to 12 carbon atoms, more preferably 4 to 10, and most preferably 4 to 6 carbon atoms. Typical, but non-limiting examples of acyclic conjugated dienes are 1,3-butadiene, isoprene (2-methyl-1,3-butadiene), 2,3-dimethyl 1,3-pentadiene, 2-methyl-1,2-pentadiene, 2,3-dimethyl-1,3-pentadiene, 3-methyl-1,3-pentadiene, 2-phenyl butadiene, chloroprene piperidene and alkyl acrylates and methacrylates having 4 to 12 carbon atoms. Typical, but non-limiting examples of cyclic conjugated dienes are cyclopentadiene and methyl cyclopentadiene. The preferred conjugated dienes of the instant invention are acyclic, for example 1,3-butadiene, isoprene and chloroprene. In the formation of the sulfonate containing copolymer, one copolymerizes one of the aforementioned conjugated dienes with the sulfonate containing monomer. Sulfonate containing terpolymers can be readily formed by copolymerizing the sulfonate containing monomer with a mixture of two of the above identified conjugated dienes.

The sulfonate containing monomers of the instant invention which are water soluble can be generally described as a monomer having unsaturation and a metal or amine sulfonate group. The metal or amine neutralized sulfonate monomer is characterized by the formula:

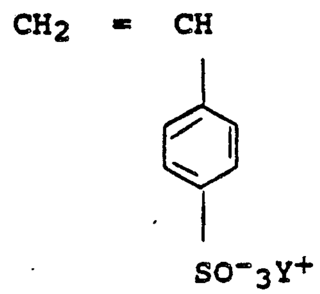

wherein Y is a cation selected from Groups IA, IIA, IB and IIB of the Periodic Table, and an amine of the formula:

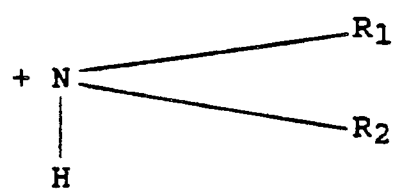

where $R_1$ and $R_2$ can be aliphatic groups of $C_1$ to $C_{12}$ or hydrogen. Particularly suitable metal cations are sodium, potassium, and zinc, and an especially preferred metal cation is sodium.

An especially preferred sulfonate containing monomer is metal sulfonate styrene. The molar ratio of sulfonate containing monomer to conjugated diene is preferably 0.2 to 10, more preferably 0.3 to 7, and most preferably 0.3 to 5. Either a water soluble, free radical initiator such as potassium persulfate, ammonium persulfate, water soluble redox couples such as potassium persulfate, sodium metabisulfite or oil soluble, water soluble redox couples such as diisopropyl benzene hydroperoxide, triethylenetetramine are effective in initiating these copolymerizations. The water soluble inorganic systems are preferred because of an apparent reduction of side reactions with the resulting unsaturated polymer.

The surfactants which may be employed for this invention are varied and well known in the art. The typical emulsifiers or surfactants can be employed, however, some are more effective than others in generating latexes of better stability. A preferred is sodium lauryl sulfate. This copolymerization can also be conducted without emulsifier because of the surfactancy of the sulfonate monomer.

Buffering agents can be employed in the instant polymerization process and are selected from the group consisting of sodium carbonate, ammonia, sodium acetate, trisodium phosphate etc. When utilized, these buffering agents are employed at a concentration of 0.1 to 5 grams/100 grams water employed in the emulsion system.

Chain transfer agents can be readily employed in the instant polymerization process for controlling the molecular weight of the resultant copolymer. The concentration of chain transfer agent is from 0 to 1.0 grams/100 grams of the combined weight of the sulfonate containing monomer and the conjugated diene.

The free radical emulsion copolymerization of the water soluble sulfonate containing polymer and the

conjugated diene yields a stable latex, wherein the resultant water insoluble co- or terpolymer is not covalently crosslinked and possesses substantial ionic crosslinking, and preferably has 0.2 to 3.0 weight percent of chemically combined sulfur, more preferably 0.3 to 1.0. To the resultant latex is added the tackifier resin to form the emulsion type adhesive composition.

To the emulsion of the metal neutralized sulfonated elastomeric co- or terpolymer is added a commercial tackifying resin preferably having a softening point of 0 to 200°C more preferably 0 to 175 and most preferably 0 to 150°C. A variety of commercial tackifier resins are available. The resins typically contain aliphatic dienes and mono-olefins. Some of these resins contain and/or pinene base and/or pire polyterpene resins as the main ingredient, while others are derived from the polymerization of petroleum or coal distillates which consist of aliphatic dienes, mono and diolefins and cyclic olefins having 4 to 6 carbon atoms. The latter type of tackifiers have primarily piperyline and/or isoprene structure. A general but excellent description of tackifying resins derived from petroleum derivatives can be found in, for example, Encyclopedia of Polymer Science and Technology Vol. 9, pages 853 to 860, chapter by John Findlay, published by John Wiley & Sons, NY (1968).

Typical but non-limiting tradenames of these commercial tackifiers are Wingtack of Goodyear, Escorez of Exxon, Piccolyte of Hercules and Zonarez of Arizona Chemicals. Recently, these and various other companies have also started marketing relatively higher softening point resins. These are generally modified aliphatic hydrocarbon resins and/or hydrogenated polycyclics. The physical appearance of these commercial tackifying resins varies, depending upon their softening point, they can be either viscous liquids or light-colored solids at room temperature. Most often, their initial color (Gardner) is 2.0 to 7.0 and the ensity from about 0.7 to 1.0 gm/cm$^3$ at room temperature. The acid number of these resins is usually less than 1. In general, the molecular weight of these commercial tackifying resins is not homogenous, the number average molecular weight Mn, as measured by GPC, can be from 3000 to 5000, and more preferably 400 to 3000, and most preferably 500 to 2000.

As well-known to those familiar with the use of tackifying resins, because of their wide range compatibility, any of them can be used with sulfonated polymers in proper formulation, which will yield adhesive systems of varying physical characteristics. To cite an example in the present invention, the tackifying resins used are those based on hydrocarbon resins.

These hydrocarbon tackifier resins are incorporated into the emulsion type adhesive composition at 25 to 300 parts by weight per 100 parts by weight of the metal neutralized sulfonated copolymer, preferably 25 to 250, more preferably 50 to 250, and most preferably 75 to 200.

In forming the emulsion type adhesive composition of the metal neutralized sulfonated elastomeric copolymer the tackifier resin is dissolved in a hydrocarbon solvent such as toluene at a typical concentration level of 2 to 50 grams per 100 ml of solvent, for example 10 grams. The solution of tackifier resin is added to the emulsion of the metal neutralized sulfonated copolymer and vigorously mixed to form the emulsion type adhesive composition.

It is observed that the composition of the instant invention can also include oils to further improve low temperature properties and tack characteristics of the resulting adhesive levels of oil of less than 100 parts by weight per 100 parts of the sulfonated copolymer can be incorporated, more preferably 1 to 90 parts. Oils are particularly useful when high levels of petroleum resin tackifiers are used since such materials can harden the resulting composition. Oils can usually further soften and reduce the cost. In some cases, oils can significantly contribute to the degree of tackiness of the final product and thus are helpful in formulating various adhesive products. Typical oils that can be used may be low viscosity aromatic, naphthenic or paraffinic petroleum oils, having less than 2 weight percent polar type compounds. Typical oils are illustrated in Table I.

TABLE I

| Type Oil | Oil Code # | Viscosity ssu | Mn | % Polars | % Aromatic | % Saturate |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | --- | 1.3 | 70.3 | 28.4 |
| Naphthenic | Flexon 765 | 505 | --- | 0.9 | 20.8 | 78.3 |

An emulsion of a preferential (ionic) plasticizer can be added to the emulsion to the neutralized sulfonated copolymer of the conjugated diene/neutralized styrene sulfonate and the hydrocarbon tackifying resin.

The preferential plasticizer is preferably selected from carboxylic acids having 5 to 30 carbon atoms, more preferably 8 to 22 carbon atoms, or basic salts of these carboxylic acids, wherein the metal ion of the basic salt is selected from the group consisting of aluminum, ammonium, lead and Groups IA, IIA, IB and IIB of the Periodic Table of Elements and mixtures thereof. The carboxylic acids are selected from lauric, myristic, palmitic, or stearic acids and mixtures thereof; e.g., zinc stearate, magnesium stearate, or zinc laurate.

The preferential plasticizer is preferably incorporated into the adhesive composition at 1 to 75 parts by weight based on 100 parts by weight of the copolymer, more preferably at 7 to 50, and most preferably at 10 to 30. Alternatively, other preferential plasticizers are selected from amines, amides such as stearamide, ammonium and amine salts of carboxylic acids and mixtures thereof.

The emulsion of the metal neutralized sulfonate elastomeric co- or terpolymer can be doctor bladed to the required thickness onto a substrate and the formed adhesive film is dried at room temperature or elevated temperature either under vacuum or at atmospheric pressure for a sufficient period of time in order to remove the water from the adhesive film.

As exemplified in the following illustrative examples a series of emulsion type adhesive composition were prepared.

Example 1

Emulsion Copolymerization of Isoprene and Sodium-Styrene Sulfonate

A three liter, well mixed, stainless steel pressure vessel was charged with 920 grams of Isoprene and a blend of 1150 g deaerated water, 80 g of sodium styrene sulfonate (NaSS), 40 g of sodium-laurylsulfate and 22 g of Dodecylthiol. The vessel was closed and purged with dry nitrogen. Later the agitation was turned on and the polymerization temperature was set at 45° C. To initiate the reaction, 3.4 grams of potassium-persulfate (dissolved in 50 ml of water) was injected into the vessel. During the course of polymerization reaction, no special attempts were made to control the temperature until it reached to about 90° C. Beyond this, the reactor vessel was occasionally cooled down through a water jacket surrounding the vessel, in order to avoid the excessive pressure build-up in the reactor. Since most of the reaction is completed during the initial stages of polymerization, it can be that this run(and the following three runs - examples 2, 3, and 4) were essentially made under adiabatic conditions.

After three hours reaction time, the reaction was stopped by discharging the reactor content into a container which had 1.0 gram Hydroquinone and 100 ml water.

Copolymer Work-up

Precipitate half of the emulsion in 4.0 gallon of methanol. Dissolve 285 grams of NaCL in 1200 ml water and add it to the methanol-emulsion blend (to coagulate the emulsion). Stir blend with a large spatula and wash coagulated copolymer with water several times, to extract the NaCL. "Waring Blend" polymer in fresh methanol (containing 1.0 gram of BHT stabilizer), for one half minute at high speed. Vacuum filter polymer and dry it in a vacuum oven for 24 hours at 250° C. Weigh polymer and send samples for analysis.
Total weight of copolymer: 788 grams (~ 74% conversion)
Analytical results:
Sulfur: 1.15 wt.%
Sodium: 0.50 wt.%
0.50 wt.% sodium is equivalent to about 1.2 mole % NaSS in the copolymer.

Example 2

In the second series of experiments, emulsions were prepared in the same way as those in Example 1

except the recipe was somewhat different. In the second example, the amount of NaSS was 72 grams, the isoprene 816g, water 1200g, Nalaurylsulfate 54g, Dodecylthiol 19.2g, and the potassium-persulfate 3.0 gram. Other conditions were the same as in Example 1.

Results:

Total weight of copolymer: 790 grams (~ 89% conversion)
Analytical data:
Sulfur: 1.04 wt.%
Sodium: 0.48 wt.%
0.48 wt.% sodium is equivalent to about 1.1 mole % NaSS.

Example 3

Example 3 is identical to Example 2, except with 9.6g Dodecylthiol.

Results:

Analytical Data:
Sulfur: 0.99 wt.%
Sodium: 0.52 wt.%
0.52 wt.% Sodium is equivalent to about 1.3 mole% NaSS.

Example 4

Example 4 is identical to Example 2, except with 4.8g Dodecylthiol.

Results:

The total weight of copolymer: 843 grams (95% conversion)
Analytical Data:
Sulfur: 0.83 wt.%
Sodium: 0.51 wt.%
0.51 wt.% sodium is equivalent to about 1.25 mole% NaSS.

Example 5

In example 5, we used a similar, but a slightly larger reactor (1 gallon), and the process conditions were also different., The Copolymerization temperature was 55 °C, and the duration of the reaction was five hours.

The temperature during the course of this run was kept constant at 55 °C. Thus it is to be noted that the reaction conditions of this run were significantly different then the previous four examples. Thus run was made under isothermal polymerization conditions while the runs or previous examples were carried adiabatically.

The charges in this run were the following: isoprene 1020g, NaSS 30g, 1500g of water, 75g Nalaurylsulfate, 3g dodecylthiol, and 3.75 of potassium persulfate.

Results:

The total weight of copolymer: 840 grams (80% conversion)
The detail recipes and polymerization conditions of above examples (1 thru 5) are summarized in the

following Table II.

TABLE II

| FREE RADICAL EMULSION COPOLYMERIZATION OF ISOPRENE AND SODIUM-STYRENE SULFONATE | | | | | |
|---|---|---|---|---|---|
| Example | 1 | 2 | 3 | 4 | 5* |
| Process Conditions | Adiabatic runs | | | | |
| Temp., °C | 45 | 45 | 45 | 45 | 55 |
| Duration, Hours | 3 | 3 | 3 | 3 | 5 |
| Feed, Grams | | | | | |
| Isoprene | 920 | 816 | 816 | 816 | 1020 |
| Na Styrene-Sulfonate | 80 | 72 | 72 | 72 | 30 |
| Water | 1150 | 1200 | 1200 | 1200 | 1500 |
| Na-Laurylsulfate | 40 | 54 | 54 | 36 | 75 |
| Dodecylthiol | 22 | 19.2 | 9.6 | 4.8 | 3.0 |
| K-Persulfate | 3.4 | 3.0 | 3.0 | 3.0 | 3.75 |

* Isothermal run.

## Example 6

### Preparation of Emulsion of Isoprene -NaSS (Sodium Styrene Sulfonate) Copolymers and Escorez Resin

Emulsions containing both isoprene -NaSS copolymer and Escorez resin tackifier can be prepared by two methods. They are:

6.1 Escorez resin (50.5g) was dissolved into 50 ml. of toluene. Seven ml. (ca. 3.5g polymer) of this solution were added to 10 ml. of a typical copolymer emulsion described in Examples 1 through 4 and vigorously mixed on a shaker bath for 20 minutes. A new, "stable" emulsion was evaluated for adhesive application.

6.2 Thirty ml. of an Escorez emulsion (ca. 15g of polymer) were combined with 43 ml. of an emulsion of examples 1 through 5 (ca. 15g of copolymer) and mixed as in Example 6.1. The new "stable" emulsion was evaluated as described.

Either of the above two methods could be employed for the preparation of adhesives and the preference of one over the other is not a critical component of the present invention.

## Example 7

Desired quantities of emulsions prepared from the above techniques were cast on a 1.5 ml thick mylar film using an adhesive draw-down blade. Wet adhesive film thickness was experimental determined such that the adhesive film when dried, was 1.0-1.5 mil thick. The adhesive film was dried and the resin polymer and isoprene NaSS copolymer blend fused by exposure to 100 °C for two minutes. Appropriate test specimens were then prepared and standard pressure sensitive adhesive tests were run. Illustrative data are shown in Table III.

TABLE III

| ISOPRENE Na STYRENE SULFONATE COPOLYMERS DRIED POLYMER AND FORMULATED ADHESIVE PROPERTIES | | | | | |
|---|---|---|---|---|---|
| Examples | 1 | 2 | 3 | 4 | 5 |
| Dried Polymer Properties | | | | | |
| Clarity/Color(1) | C/Y | C/WW | C/OW | C/OW | C/OW |
| Strenthy & Elasticity(2) | moderate | moderate | moderate | moderate | moderate |
| Finger Tack | SL | No | No | No | SL |
| Film PSA Properties | | | | | |
| Rolling Ball Tack | 30+ | 30+ | 30+ | - | - |
| 180° Peel Strength, ppi | 0 | 0 | 0 | - | - |
| Film Quality | OK | OK | OK | - | - |
| Formulated Adhesive Properties(3) | | | | | |
| Rolling Ball Tack, cm | 24 | 30+ | 30+ | 30+ | 15 |
| Polyken Tack, gm | 905 | 540 | 135 | 55 | 600 |
| 90° Quick Stick, ppi | 1.6 | 1.6 | 0.5 | 0.1 | 0.7 |
| Loop Tack, ppi | 3.1AT | 2.6 | 0.8 | 0.2 | -5 |
| 180° Peel Strength, ppi | 2.5AT | 2.4 | 0.8 | 0.1 | 2.4 |
| 178° Hold to Steel, hrs. | 0.8 | 3.4 | 61.1 | 100+ | 18 |

(1) C = clear, WW = water white, OW = off-white, Y = yellow.
(2) Qualitative rating of strength and elasticity.
(3) Latices blended with 100 phr (dry basis) Escorez 1310 emulsion, filmed to 1+ mil (dry) and fused 2′/100° C. AT indicates adhesive transfer.

## Example 8

It is clear from the data presented in Table III that there are significant differences in the various samples. Since in all adhesive blends a common tackifying resin Escorez-1310 was used, the differences can readily be attributed to the composition differences of Iso-NaSS copolymers used in formulating these systems. In order to delineate the differences, extensive physical characterization studies of these copolymers were carried out. Standard polymer characterization tools were used for such studies. The data taken on dried copolymer emulsion films are presented in Table IV.

TABLE IV

| PHYSICAL CHARACTERIZATION DATA OF ISOPRENE - NaSS COPOLYMERS | | | | | |
|---|---|---|---|---|---|
| Sample | 100% Modulus(1) (psi) | Tensile Strength (psi) | % Elongation | Tg °C(2) | Reduced Viscosity(3) |
| (Example 1) | 118 | 118 | 100 | -52 | 0.88 |
| (Example 2) | 64 | 77 | 170 | -56 | 0.59 |
| (Example 3) | 112 | 204 | 280 | -53 | - |
| (Example 4)(4) | 168 | 208 | 150 | -56 | - |
| (Example 5) | low | low | high | -58 | 1.81 |

(1) Measured via an Instron using 20"/min crosshead speed.
(2) Measured via Perkin Elmer TMA; model TMS-2 using 20 gm load at 10°/min heating rate, He atmosphere.
(3) Reduced viscosity of solubles at 1% concentration level in xylene/methanol (95/5 by vol.) cosolvent mixture.
(4) Data of a different sample, however, made under identical condition as of Example 4.

By comparing the data presented in Table IV with those of Table III, it becomes obvious that the affect of level of various ingredients have pronounced affects on the properties of copolymers. Particularly, the level of sulfonation and chain transfer agent (dodecylthiol) have major impact on the polymers which in turn affect the final PSA performance of these systems. Thus for example, samples of Example I and Example II which were produced under high level of chain transfer agent, yield systems which have good tack properties but poor cohesive strength as judged from their hold to steel PSA measurements (see Table III). The reasons for poor cohesive strength is believed to be due to their low molecular weights as pointed by their intrinsic viscosity data and their solubility behavior (see Table IV, columns 6 and 7). On the other hand, samples of examples 3 and 4 show poor adhesive tack properties, but excellent cohesive strength (Table III). These samples are extremely high molecular weight materials which imparts to their good cohesive strength. (See Table IV, column 6). Because of the high molecular weight species and (also high levels of NaSS) in these systems the materials are relatively non-tacky and in normal conditions do not form good PSA adhesive candidates.

The sample of example 5 is an example which shows a good balance of both the tack properties and cohesive strength (Table III). The solubility and intrinsic viscosity data of Table IV shows that this sample has moderately high molecular weight polyisoprene component and moderate level of NaSS. The combination of these two factors in this type of copolymers result in a system which, when suitably tackified with a hydrocarbon resin such as Escorez 1310 as shown in this invention, make an excellent basis for various water based PSA applications.

Thus from the arguments presented above it is clear that the subject matter of this invention is markedly different than these for example, disclosed in 4,483,960 by Agarwal, et al. In 4,483,960 compositions as exemplified by example 5 were not remotely hinted or disclosed (see for example, Table 1 of 4,483,960).

## Claims

1. A pressure sensitive adhesive system derived from an emulsion comprising of:

(a) a metal neutralized sulfonated copolymer of a conjugated diene/a neutralized styrene sulfonate, said neutralized sulfonated copolymer having 5 to 100 meq. of neutralized sulfonated groups per 100 grams of said neutralized sulfonated copolymer wherein said neutralized sulfonated copolymer comprises at least 80% by weight of said conjugated diene and said neutralized sulfonated copolymer has an intrinsic viscosity of 0.5 to 3.0; and

(b) 25 to 300 parts by weight of a hydrocarbon tackifying resin based on a petroleum or coal tar distillate per 100 parts by weight of said neutralized sulfonated elastomeric copolymer.

2. A pressure sensitive adhesive according to claim 1 wherein said conjugated diene is selected from isoprene, butadiene, chloroprene and an acrylate and methacrylate having 4 to 12 carbon atoms.

3. A pressure sensitive adhesive emulsion according to claim 1 or 2, wherein said sulfonate groups are neutralized with an amine or a metal cation of Groups IA, IIA, IB and IIB of the Periodic Table of Elements.

4. A pressure sensitive adhesive according to any preceding claim wherein said emulsion has been deposited on a substrate in the form of a tacky adhesive layer.

European Patent Office

# EUROPEAN SEARCH REPORT

Application Number

EP 89 31 3476

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 483 960 (P.K. AGARWAL et al.)<br>* Claims 1,7,8 *<br>--- | 1-4 | C 08 F 236/10<br>C 09 J 109/10<br>C 09 J 133/06 |
| X | EP-A-0 251 726 (EXXON)<br>* Claims 1,5,8,9; page 4, lines 3-29 *<br>--- | 1-4 | |
| X | US-A-4 387 172 (P.K. AGARWAL et al.)<br>* Claim 1; column 1, lines 56-58 *<br>----- | 1-4 | |
| | | | **TECHNICAL FIELDS SEARCHED (Int. Cl.5)** |
| | | | C 08 F<br>C 09 J |

The present search report has been drawn up for all claims

| Place of search | Date of completion of the search | Examiner |
|---|---|---|
| THE HAGUE | 09-03-1990 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document